# EUROPEAN PATENT APPLICATION

(11) **EP 1 551 023 A1**
(43) Date of publication of application: **06.07.2005**
(21) Application number: 03798553.8
(22) Date of filing: 29.09.2003
(51) Int. Cl.: G11B 20/10, H04N 5/91

(54) **MOVING PICTURE/AUDIO RECORDING DEVICE AND MOVING PICTURE/AUDIO RECORDING METHOD**

(30) Priority: 30.09.2002 JP 2002287112; 11.10.2002 JP 2002298449; 18.09.2003 JP 2003326607
(71) Applicant: Sharp Kabushiki Kaisha, Osaka-shi, Osaka 545-8522 (JP)
(72) Inventor: AONO, Tomoko, Chiba-shi, Chiba 262-0033 (JP); TAKAHASHI, Maki, Chiba-shi, Chiba 260-0834 (JP); OHHARA, Kazuto, Funabashi-shi, Chiba 274-0063 (JP); ITOH, Motohiro, Chiba-shi. Chiba 261-0011 (JP); KATATA, Hiroyuki, Chiba-shi, Chiba 266-0005 (JP)
(74) Representative: Brown, Kenneth Richard
(86) International application number: PCT/JP2003/012484
(87) International publication number: WO 2004/029958

(57) **Abstract**

A moving image/audio recording apparatus in which failure of recording due to erroneous operation and operation timing deviation can be prevented is implemented. Moving image data and audio data prior to the start of recording are multiplexed by a multiplexing unit 103. The multiplexed data is temporarily stored in a built-in memory 104. A control unit 106 which has received an instruction to start a going back recording changes the going back recording start time to the time subsequent to the time when the encoding conditions or channels are changed to those at the time of the instruction to start recording if the encoding condition or the channel at the time which goes back by a period of time preset as the going back time is different from that at the time of the instruction to start recording and consecutively reads out the multiplexed data from the memory 104 for recording them in a recording unit 105 via a changeover switch 108. If the first frame at the time to start the going back recording on the recording unit 105 is not a key frame, recording is started with a key frame which is closest to the time to start the going back recording.

## Description

### TECHNICAL FIELD

The present invention relates to an apparatus and method of recording moving image and audio, and in particular to an apparatus and method of recording moving image and audio in which encoded data of compressed moving image and audio are efficiently recorded in a storage media for a device for recording television programs such as moving image and audio.

### BACKGROUND OF THE INVENTION

Developments for practical use of encoding technologies have been advanced for digitally storing a large amount of moving image and audio data such as television broadcast programs. For example, various encoding formats such as MPEG-1, MPEG-2, MPEG-4 , DV compression for moving images and G.729, G.723.1, G.726, GSM-AMR, AAC, MPEG Layer 1, MPEG Layer 2, MP3 and the like for audio have been developed. These formats enable television programs to be recorded on storage media such as DVD-RAM, DVD-R and hard disks. Recently, various memory cards such as Smart Media (trade mark), Compact Flash (trade mark), Memory-Stick (trade mark), Multimedia Card, Secure Digital (trade mark) card (SD card) have been widely used as storage media.

In video recording apparatus using a hard disk as a storage medium, a function such as "time shift playback" in which a television program is viewed and listened after some deviation from actual broadcasting time and a function to enable the television program which is viewed and listened at a time shift playback mode to be recorded by a user's depressing a recording button have been implemented (see, for example, Japanese Laid-Open Patent Publication No. 2002-142177).

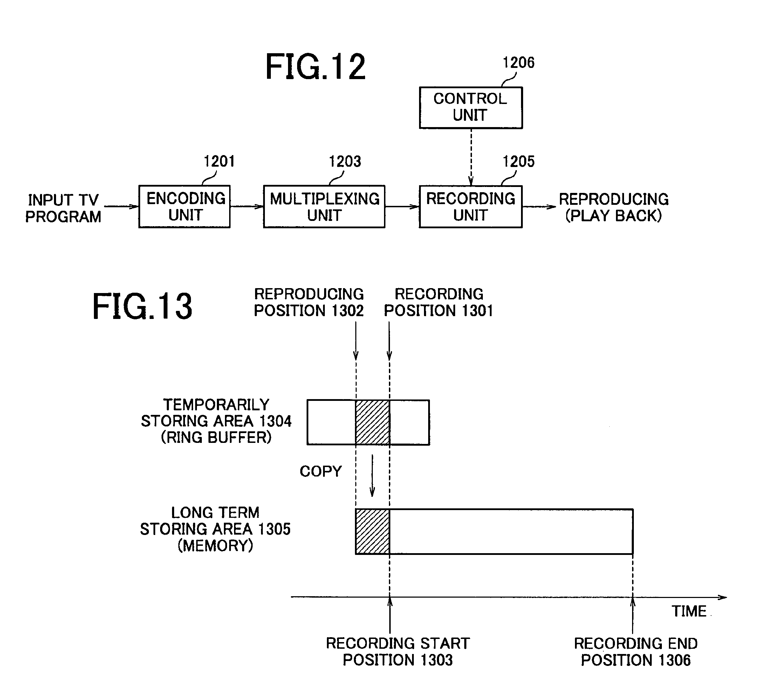

A prior art of time shift playback and program recording will be described with reference to Figs. 12 and 13. Fig 12 is a block diagram showing a recording and playback apparatus in a prior art. In the drawing, a reference numeral 1201 denotes an encoding unit for encoding moving image and audio of an input television program; 1203 denotes a multiplexing unit for multiplexing encoded data of moving image and audio; 1205 denotes a recording unit for recording multiplexed data; 1206 denotes a control unit for controlling the recording of multiplexed data and a recording area on the recording unit 1205. Fig. 13 is a diagram showing the operation of a prior art recording and reproducing (playback) apparatus and its memory and explaining the concept of the time shift playback and program recording using the recording unit 1205 and control unit 1206 shown in Fig. 12.

The recording unit 1205 in Fig. 12 comprises two areas such as temporarily storing area 1304 which normally records a program which is being received and a long term storing area 1305 which records the program after a user depressed a recording button as shown in Fig. 13. The temporarily storing area 1304 comprises a ring buffer. When data is recorded up to the end of the buffer, new data is consecutively overwritten on the old data from the start position of the buffer. Accordingly, data cannotbe stored on the temporarily storing area 1304 for an extended period of time.

After a user begins reception of moving image and audio of an input television program for viewing and listening thereof using the recording and playback apparatus of Fig. 12, the moving image and audio data which are normally encoded and multiplexed are recorded in the temporarily storing area 1304.

If the user selects time shift playback, the television program which is being received is encoded and multiplexed so that it is recorded in a recording position 1301 of the temporarily storing area 1304 and simultaneously with this, the multiplexed data in the playback position 1302 is read out for playback. When the user depresses the recording button during the time shift playback, the received program is recorded on the long term storing area 1305 from the recording start position 1303. Since the user actually views and listens to the multiplexed data in the playback position 1302 , it is also necessary to record the multiplexed data between the playback position 1302 and the recording position 1301 in the long term storing area 1305. At this end, the recording and playback apparatus shown in Fig. 12 conducts the operations as follows:

All data which the user has received until end of the recording since the depression of the recording button by the user is encoded, multiplexed and then recorded in the long term storing area 1305. The control unit 1206 switches the destination to which the data being encoded by the encoding unit 1201 and multiplexed by the multiplexing unit 1203 is recorded from the temporarily storing area 1304 to the long term storing area 1305 of the recording unit 1205 when the recording button is depressed by the user. This can be achieved by changing the recording destination from the recording position 1301 of the temporarily storing area 1304 to the recording start position 1303 of the long term storing area 1305. The control unit 1206 issues an instruction to copy the multiplexed data of a given period of time recorded on the temporarily storing area 1304 (hatched portion of the temporarily storing area 1304 in Fig. 13) on an area immediately before the recording start position 1303 of the long term storing area 1305.

This processing enables the program contents subsequent to the position in which the user actually viewed and listened on a monitor TV (in time shift playback mode) when the user depressed the recording button to be recorded in the long term storing area 1305 of the recording unit 1205.

However, the user may fail to record the portion which he or she wants to record due to deviation of timing of recording button depression or erroneous operation since the user manually depresses the recording button while watching the television screen.

Even if the program which goes back from the time of the instruction to start the recording of the image which the user viewed can be recorded, changing encoding conditions or the channel which user views may cause the problems as follows: Even if the changes were made prior to depression of the recording button, the data before and after the change may be recorded since the program which goes back in time is recorded. If the data which includes that before and after the changes in encoding conditions, or channels is recorded, the image quality may unnaturally change on its playback or the channel which is not related with the user's intention might be played back.

I f the program which goes back from the time of the instruction to start recording of the image which the user viewed is recorded, there is a need to freely set the going back period of time.

In an example of the cited Japanese Laid-Open Patent Publication No. 2002-142177, desired data is prepared by extracting a part of the multiplexed data. In this case, header information should be newly added to the front position of the multiplexed data which has been extracted. Since information on the multiplexed data occupies most of the header information in the format which complies with, for example, MPEG-4 system, there is also a problem in that it is hard to prepare header information which is to be newly added to data which extracting part of multiplexed data.

If formats such as MPEG-1, MPEG-2 or MPEG-4 based upon the correlation in a time direction is used for encoding moving images, the data can not be normally played back unless the data is subsequent to the intraframe encoded frame which is a key frame. Therefore, the heading of the moving image encoded data should be considered when part of the multiplexed data is extracted.

If a storage medium having less rewritable times such as flash memory is used for the recording unit 1205, normal recording of programs which are viewed by a user in the temporarily storing area 1304 shown in Fig. 13 of the storage medium will make the service life time of the storage medium remarkably shorter.

The present invention was made to solve the above-mentioned problem. It is an object of the present invention to provide an apparatus and method of recording moving image and audio which is capable of solving the above-mentioned problems and compensates for the deviation of timing for depressing the recording button even if the television program is recorded in a storage medium from the time which goes back since the start of recording is instructed by a user manually depressing the recording button while watching the television screen.

### DISCLOSURE OF THE INVENTION

A first invention resides in a moving image/audio recording apparatus, wherein the apparatus comprises a memory for temporarily storing moving image data and/or audio data; a recording unit for recording the moving image data and/or audio data in response to an instruction to start recording; and an encoding unit for encoding the moving image and/or audio in specified encoding conditions; and wherein if the moving image data and/or the audio data from the time which goes back from the time of the instruction to start recording are/is recorded in the recording unit, the time which goes back is subsequent to the time when the encoding conditions are changed to those at the time of the instruction to start recording.

A second invention resides in a moving image/audio recording apparatus, wherein the apparatus comprises a memory for temporarily storing moving image data and/or audio data; a recording unit for recording the moving image data and/or audio data in response to an instruction to start recording; and a switching unit for switching moving image and/or audio to other moving image and/or other audio; and wherein if the moving image data and/or the audio data from the time which goes back from the time of the instruction to start recording are/is recorded in the recording unit, the time which goes back is subsequent to the time when the moving image and/or audio are/is switched to those at the time of the instruction to start recording.

A third invention resides in a moving image/audio recording apparatus, wherein the apparatus comprises a memory for temporarily storing moving image data and/or audio data; a recording unit for recording the moving image data and/or audio data in response to an instruction to start recording; and a mode selecting unit for selecting a mode of going back operation; and wherein any one of recording of the moving image data and/or audio data from the time which goes back from the time of the instruction to start recording and recording of the moving image data and/or audio data from the time of the instruction to start recording in the recording unit is selected as the mode of going back operation in the mode selecting unit.

A fourth invention resides in a moving image/audio recording apparatus, wherein the apparatus comprises a memory for temporarily storing moving image data and/or audio data; a recording unit for recording the moving image data and/or audio data in response to an instruction to start recording; and a parameter setting unit for setting a time which goes back by a given period of time from the time of the instruction to start recording, and wherein the moving image data and/or audio data from the time corresponding to a key frame of the moving image data existing at the going back time or in the vicinity thereof are/is recorded in the recording unit.

A fifth invention resides in a moving image/audio recording apparatus, wherein the apparatus comprises a memory for temporarily storing moving image data and/or audio data; a recording unit for recording the moving image data and/or audio data in response to an instruction to start recording; and a parameter setting unit for setting a time which goes back by a given period of time from the time of the instruction to start recording, and wherein the moving image data and/or audio data from the time which goes back are/is recorded in the recording unit and the given period of time is set by selecting any one of a plurality of time lengths in the parameter setting unit.

A sixth invention resides in a moving image/audio recording apparatus, wherein the apparatus comprises a memory for temporarily storing moving image data and/or audio data; a recording unit for recording the moving image data and/or audio data in response to an instruction to start recording; and wherein the recording unit is adapted to record the moving image data and/or audio data from the time which goes back from the time of the instruction to start recording and the number of the rewritable times of the memory is larger than that of the recording unit.

A seventh invention resides in a moving image/audio recording method, wherein the method comprises a recording step for recording the moving image data and/or audio data in a recording medium in response to an instruction to start recording; and an encoding step for encoding the moving image and/or audio in specified encoding conditions; and wherein if the moving image data and/or the audio data from the time which goes back from the time of the instruction to start recording are/is recorded at the recording step, the time which goes back is subsequent to the time when the encoding conditions are changed to those at the time of the instruction to start recording.

An eighth invention resides in a moving image/audio recording method, wherein the method comprises a recording step for recording the moving image data and/or audio data in a recording medium in response to an instruction to start recording; and a switching step for switching moving image and/or audio to other moving image and/or other audio; and wherein if the moving image data and/or the audio data from the time which goes back from the time of the instruction to start recording are/is recorded at the recording step, the time which goes back is subsequent to the time when the moving image and/or audio are/is switched to those at the time of the instruction to start recording.

A ninth invention resides in a moving image/audio recording method, wherein the method comprises a recording step for recording the moving image data and/or audio data in a recording medium in response to an instruction to start recording; and a mode selecting step for selecting a mode of going back operation ; and wherein any one of recording of the moving image data and/or audio data from the time which goes back from the time of the instruction to start recording and recording of the moving image data and/or audio data from the time of the instruction to start recording in the recording unit is selected as the mode of going back operation at the mode selecting step.

A tenth invention resides in a moving image/audio recording method, wherein the method comprises a recording step for recording the moving image data and/or audio data in a recording medium in response to an instruction to start recording; and a parameter setting step for setting a time which goes back by a given period of time from the time of the instruction to start recording, and wherein the moving image data and/or audio data from the time corresponding to a key frame of the moving image data existing at the going back time or in the vicinity thereof are/is recorded at the recording step.

An eleventh invention resides in a moving image/audio recording method, wherein that the method comprises a recording step for recording the moving image data and/or audio data in a recording medium in response to an instruction to start recording; and a parameter setting step for setting a time which goes back by a given period of time from the time of the instruction to start recording, and wherein the moving image data and/or audio data from the time which goes back are/is recorded at the recording step and the given period of time is set by selecting any one of a plurality of time lengths at the parameter setting step.

### BRIEF DESCRIPTION OF THE DRAWINGS

Fig. 1 is a block diagram showing a first embodiment of a moving image/audio recording apparatus of the present invention;
Fig. 2 is a block diagram showing a second embodiment of a moving image/audio recording apparatus of the present invention;
Figs. 3A through 3C are views showing the exemplary operation of the moving image/audio recording apparatus of the present invention and a memory and a recording unit;
Figs. 4A through 4C are views showing another exemplary operation of the moving image/audio recording apparatus of the present invention and a memory and a recording unit;
Figs. 5A and 5B are views showing other exemplary operation of the moving image/audio recording apparatus of the present invention and a memory and a recording unit;
Fig. 6 is a block diagram showing a third embodiment of a moving image/audio recording apparatus of the present invention;
Fig. 7 is a block diagram showing a fourth embodiment of a moving image/audio recording apparatus and a moving image/audio reproducing apparatus of the present invention;
Fig. 8 is a block diagram showing a fifth embodiment of a moving image/audio recording apparatus and a moving image/audio reproducing apparatus of the present invention;
Fig. 9 is a view showing an exemplary configuration of the actuation unit of a remote controller for setting parameters of the moving image/audio recording apparatus and moving image/audio reproducing apparatus of the present invention;
Fig. 10 is a block diagram showing an example of the parameter setting screen of the moving image/audio recording apparatus and moving image/audio reproducing apparatus of the present invention;
Fig. 11 is a block diagram showing a sixth embodiment of amoving image/audio recording apparatus and amoving image/audio reproducing apparatus of the present invention;
Fig. 12 is a block diagram showing a prior art recording and reproducing apparatus; and
Fig. 13 is a view showing the operation of the prior art recording and reproducing apparatus and its memory.

### PREFERRED EMBODIMENT OF THE INVENTION

Now, an embodiment of an apparatus and method of recording moving image and audio of the present invention will be described in detail by way of an apparatus of recording moving image and audio.

### (First Embodiment)

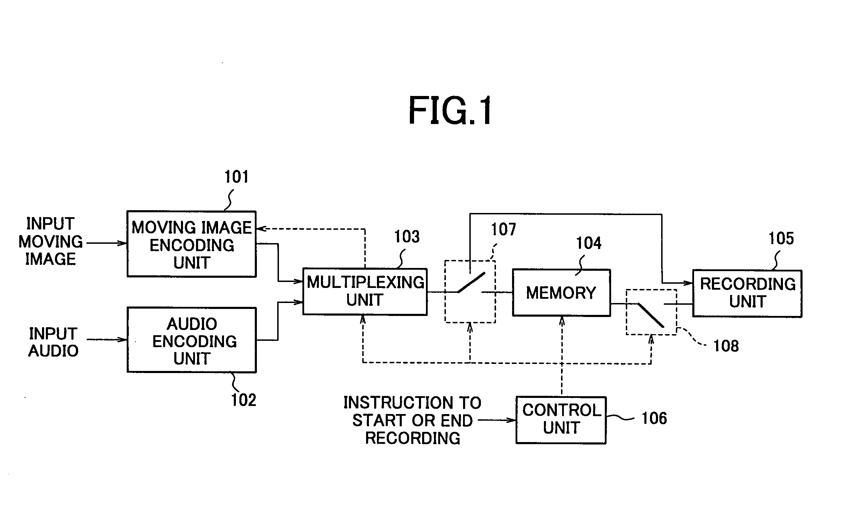

A block diagram showing a first embodiment of an apparatus of recording moving image and audio of the present invention is illustrated in Fig. 1. A reference numeral 101 denotes a moving image encoding unit for encoding input moving image, which may use various encoding formats such as MPEG-1, MPEG-2, MPEG-4, and DV compression. A reference numeral 102 denotes an audio encoding unit for encoding input audio, which may use various encoding formats such as MPEG Layer 1, MPEG Layer 2, MP3, AAC, and AC3. A reference numeral 103 denotes a multiplexing unit for multiplexing encoded data (hereinafter referred to as "elementary stream") which is capable of multiplexing encoded data in conformity with various formats such as MPEG-1 system, MPEG-2 system, MPEG-4 system, QuickTime, and ASF. A reference numeral 104 denotes a built-in memory for temporarily recording multiplexed data and adopts a double-buffer configuration as will be described hereafter. A reference numeral 105 denotes a recording unit for recording in response to an instruction to start recording from a user multiplexed data precedent to the time of a recording start instruction, which has been recorded in the memory 104 in addition to the multiplexed data which is subsequent to the time of the recording start instruction. Specifically, the recording unit 105 may include disc media such as DVD-RAM, DVD-R, CD-R as well as card memories such as Smart Media (trademark), Compact Flash (trade mark), Multimedia Card, Memory-Stick (trade mark), Secure Digital (trade mark) card (SD card). A reference numeral 106 denotes a control unit which specifies a recording destination at which the multiplexed data is to be recorded in response to an instruction of recording start or end from a user and controls for storing of the multiplexed data immediately before the recording start in the recording unit 105 from the memory 104 while modifying it. Numerals 107, 108 denote changeover switches for switching the recording destinations where the multiplexed data is to be recorded in response to an instruction from the control unit 106.

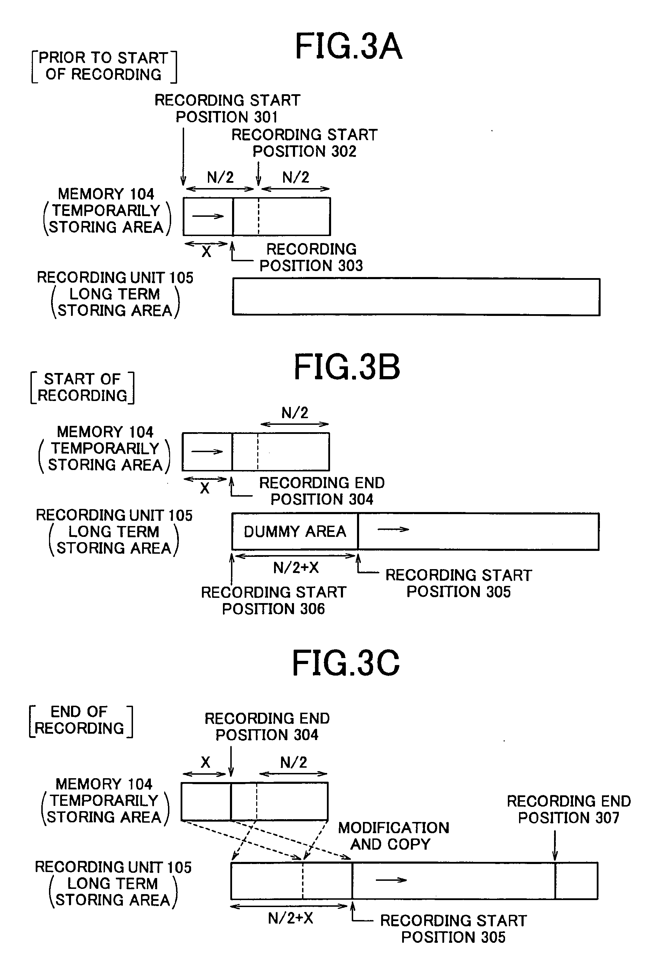

Now, the details of operation of the multiplexing unit 103, memory 104, recording unit 105, control unit 106, changeover switches 107, 108 will be described with reference to Figs. 3A through 3C. It is assumed that the moving image encoding unit 101 uses an encoding format such as a format using interframe prediction and the multiplexing unit 103 uses a multiplexing format which requires, for example, time information for synchronizing and reproducing moving image and audio data. A multiplexed file including moving image elementary stream and audio elementary stream (hereinafter referred to as moving image/audio elementary stream) which are multiplexed is normally recorded in the memory 104. (At this time, the changeover switch 107 is connected to the memory 104 so that the changeover switch 108 is turned off.)

The memory 104 comprises a FIFO memory which is divided into two areas, each starting at recording start positions 301, 302 as shown in Figs. 3A through 3C. A predetermined quantity of multiplexed file can be temporarily recorded and stored in each area (Fig. 3A). This memory configuration is referred to as "double buffer". The control unit 106 controls current recording positions on the memory 104 so that multiplexed files having headings at recording start positions 301, 302 can be extracted and issues an instruction to the moving image encoding unit 101 to encode the leading moving image data as a key frame. Thus, the elementary stream which is a key frame is output from the moving image encoding unit 101 when recording in recording startpositions 301, 302 in Fig. 3A is conducted. Themultiplexed data subsequent to these positions can be extracted. When such multiplex file having a key frame at its leading position is played back, displaying of the moving images can be quickly started.

The recording start positions 301, 302 in Fig. 3A correspond to 0th, N/2th, Nth, 3/2Nth, 2Nth....byte of the multiplexed file if it is assumed that the size of the memory 104 is N bytes which is a predetermined size. If the leading key frame of the moving image frame is not positioned at each recording start position, adjustment of the recording position is conducted by inserting a stuffing data or by stopping the recording and starting the recording of the key frame of the multiplexed file from the next recording start position.

The header of the multiplexed file may be recorded at the recording start position together with the multiplexed data of the multiplexed file. Alternatively, a separate area in which the header is stored is provided, so that it has not to be stored in the memory 104. Information such as file size, encoding rate, moving image/audio encoding format is usually stored in the header.

It is assumed that data is currently recorded on memory 104 in the recording position 303 in Fig. 3A. The recording position 303 is located in X byte-th position from the recording start position 301. Effective data areas on the memory 104 occupy X bytes between the recording start position 301 and the recording position 303 and N/2 bytes which is data of one period previously recorded in an area starting from the recording start position 302. When a user depressed a recording button, a recording start instruction will be input to the control unit 106. The control unit 106 switches the changeover switch 107 from the memory 104 to the recording unit 105, so that thereafter the multiplexed file from the multiplexing unit 103 will be recorded on the recording unit 105.

The recording unit 105 does not start the recording of the multiplexed file from the recording start position 306 on the recording unit 105, but preliminarily reserves a dummy area and starts the recording of the multiplexed data from the recording start position 305 after which a capacity of the dummy area is secured from the recording start position 306 (Fig. 3B). The size of the dummy area is (N/2+X) bytes which is the amount of effective data stored in the temporarily storing area on the memory 104.

The control unit 106 presets time information (presentation time: PT) to T (second) which is recorded in the multiplexed file together with the moving image/audio elementary stream at start of recording and presents this value of the presentation time to the multiplexing unit 103.

The multiplexing unit 103 references T and thereafter consecutively records the presentation time into multiplexed data. The value of T may be determined by calculating how many seconds of the data is written into the dummy area based upon the size of the dummy area and the encoding rate, or alternatively by calculating the difference between the recording time of the recording start position on the memory 104 (in this case, the recording start position 302 in Fig. 3A) and the recording start time corresponding to the image recording start position (in this case, image recording start position 305 in Fig. 3B). The control unit 106 also presets the number (ID) which is assigned to each divided data when the multiplexed data is divided.

When the user instructs to end the image recording, the control unit 106 connects the changeover switch 108 to the recording unit 105 for storing in the dummy area of the recording unit 105 (N/2+X) bytes of the multiplexed file which is recorded on the memory 104 immediately before the start of image recording (Fig. 3C). The control unit 106 records the multiplexed file on the memory 104 into the recording unit 105 while modifying the values of the presentation time and ID of the header information of the multiplexed file on the memory 104 so that the presentation time and the ID recorded as the header information of the multiplexed file on the memory 104 are continued to those of the multiplexed file which has been already recorded on the recording unit 105 when both multiplexed files are merged.

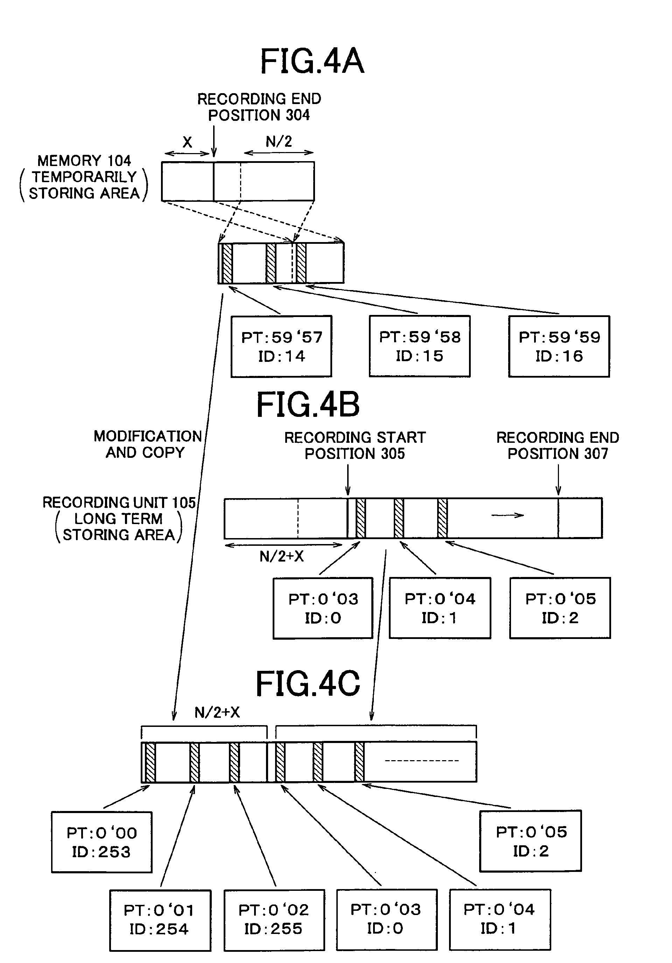

An example is shown in Figs. 4A through 4C. Figure 4A illustrates a multiplexed file on the memory 104 immediately before the start of image recording. The data which is effective on the memory 104 has presentation times (PT) which are represented as 59 minutes 57 seconds, 59 minutes 58 seconds, 59 minutes 59 seconds and IDs which are represented as 14, 15, 16, respectively (It should be noted that ID are represented in modulo of 256). The hatched areas in the drawings are representative of positions in which presentation time and ID are stored.

It is assumed that the user depressed the image recording button at 60 minutes 0 seconds after he or she began to view a program. A multiplexed file which is recorded in the recording unit 105 after the instruction to start image recording is illustrated in Fig. 4B. The presentation time (PT) of the multiplexed file is represented as 3, 4, 5 seconds and so on and its ID is represented as 0, 1, 2 and so on. The reason why the presentation time begins at 3 seconds is that the data on the memory 104 of Fig. 4A which is to be written into the dummy area of the recording unit 105 after the instruction to end recording corresponds to about 3 seconds. The presentation time and ID of the multiplexed file on the memory 104 is changed as shown in Fig. 4C so that the presentation time and ID of the multiplexed file of Fig. 4A is continuous to that of the multiplexed file of Fig. 4B. In other words, the continuity between the precedent and subsequent multiplexed files in the recording unit 105 can be kept by changing the presentation time and ID of the multiplexed file on the memory 104 from the state of Fig. 4A into 0, 1, 2 seconds and so on and 253, 254, 255, respectively.

The recording unit 105 which has recorded the multiplexed file in such a manner enables actual moving image and audio to be reproduced immediately after starting of the playback since the leading presentation time is preset to 0 second even if the multiplexed file is read out from the moving image/audio recording apparatus in interest into the other playback apparatus for playback thereof.

After the multiplexed file on the memory 104 is stored in the recording unit 105 in response to the instruction to end the image recording, the control unit 106 connects the changeover switch 107 to the memory 104 side for switching the destination at which the multiplexed file is to be recorded to the memory 104 and turns off the changeover switch 108. At this time, recording of the multiplexed file is started in memory 104 in the recording start position 301 of Fig. 3A. The control unit 106 instructs the moving image encoding unit 101 to output a key frame as a first frame.

The reason why the memory 104 is divided into two areas is to reduce the variations of the amount of effective data on the memory 104 due to deviation of timing of start of image recording instructed by the user. If it is assumed that the memory 104 is not divided and an instruction to start the image recording is issued when the data immediately after the recording start position 301 is recorded, then the amount of the multiplexed file by going back in time before the start of the image recording can be used as an effective record area becomes very small. However, the data of at least N/2 bytes which goes back in time before the start of image recording can be used by dividing the memory 104 into two areas. The memory 104 may be divided into M area (M≥2) without limiting to 2.

Although the memory 104 is in the form of double buffer in the present embodiment, it may comprise a ring buffer which enables the temporarily storing area of the memory 104 to be used in a cyclic manner.

In the above-mentioned case, effective multiplexed file is stored into the recording unit 105 from the memory 104 after the completion of image recording. It is also possible to record the multiplexed file which is subsequent to the time of the instruction to start image recording in the recording unit 105 after the effective multiplexed file is stored in the recording unit 105 from the memory 104 immediately after the instruction to start the image recording.

Playback of moving image/audio is enabled soon after the playback irrespective of the format of the multiplexing and specifications of playback apparatus by preliminarily reserving an area of the memory corresponding to the dummy area ((N/2+X) bytes) from the recording start position 306 of the recording unit 105 as shown in Fig. 3B and by recording the multiplexed file from the memory 104, which is precedent to the time of the instruction to start image recording at the dummy area while changing the presentation time and ID as shown in Fig. 3C.

### (Second Embodiment)

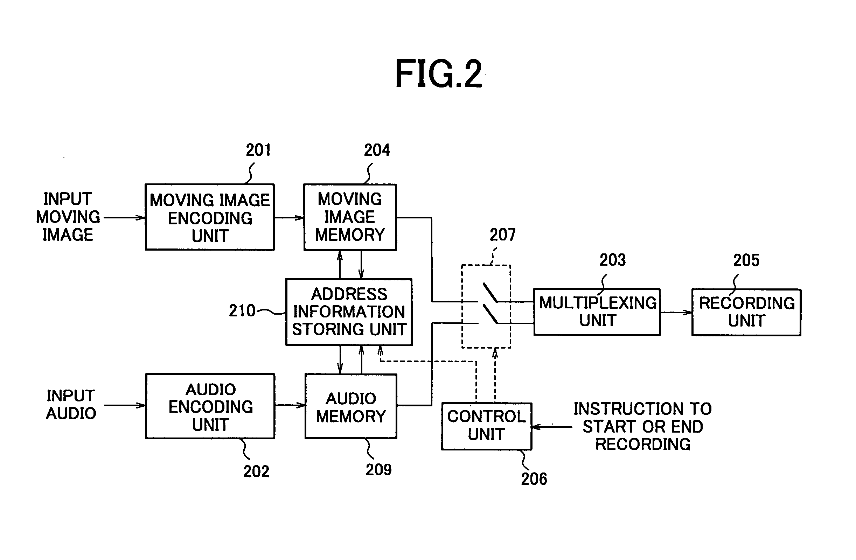

A block diagram of a second embodiment of the moving image/audio recording apparatus of the present invention is illustrated in Fig. 2. A reference numeral 201 denotes a moving image encoding unit for encoding input moving images; 202 denotes an audio encoding unit for encoding input audio; 203 denotes a multiplexing unit for multiplexing a moving image/audio elementary stream; 205 denotes a recording unit for recording multiplexed data in response to an instruction to start video image recording from a user. Respective units conduct operations similar to those of the moving image encoding unit 101, audio encoding unit 102, multiplexing unit 103 and recording unit 105 in Fig. 1. A reference numeral 204 denotes a built-in moving image memory which normally stores the elementary stream of the moving image; 209 denotes a built-in audio memory which normally stores the audio elementary stream. Both memories adopt ring buffer configuration. A reference numeral 206 denotes a control unit which controls the multiplexing and recording addresses of the elementary streams stored in the moving image memory 204 and audio memory 209 in response to an instruction to start or end the image recording from the user; 207 denotes a changeover switch which connects or disconnects the moving image memory 204 and audio memory 209 with the multiplexing unit 203 in response to an input from the control unit 206; 210 denotes an address information storing unit which stores the recording positions of the elementary streams stored in the moving image memory 204 and the audio memory 209 corresponding to a given time. It should be noted that the moving image memory 204 and the audio memory 209 may be a physically single memory. In this case, one area of the single memory is used as the moving image memory 204 and another area is used as an audio memory 209. Both areas are discriminated by controlling writing and reading addresses and so on for moving image and audio data, respectively.

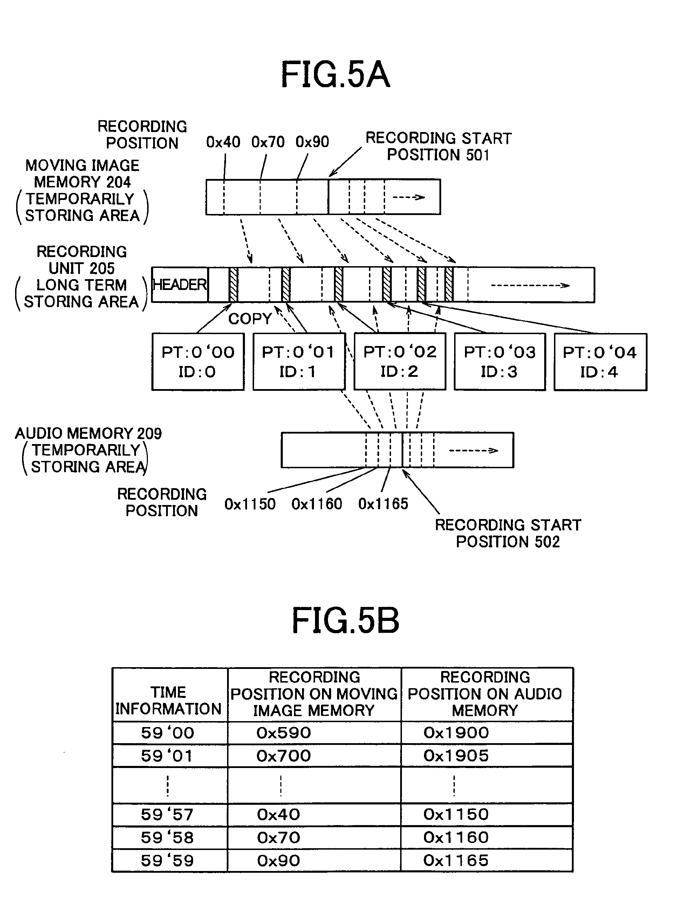

The details of the operation of the multiplexing unit 203, moving image memory 204, recording unit 205, control unit 206, changeover switch 207, audio memory 209 and address information storing unit 210 will be described with reference to Figs. 5A and 5B. The second embodiment will be described with reference to a format using interframe prediction as the encoding format of the moving image encoding unit 201 and a format which requires time information for synchronizing and reproducing decoded data of the moving image and audio as multiplexing format of the multiplexing unit 203 similarly to the first embodiment. The moving image/audio elementary stream is normally recorded in the moving image memory 204 and audio memory 209 even if image recording mode is not selected.

When image recording mode is not selected, the changeover switch 207 is turned off.

Since the moving image memory 204 and audio memory 209 are adapted to temporarily store a given quantity of data and are ring buffers as mentioned above, when the recording is finished at the end of the buffer, each of moving image and audio elementary streams is overwritten on the data in the memory from the leading end thereof. At this time, for convenience of the multiplexing, the time when one frame of the moving image is encoded as a key frame in the moving image encoding unit 201 and the recording positions corresponding to the time at which the moving image and audio elementary streams are recorded on the moving image memory 204 and audio memory 209, respectively, are recorded in the address information storing unit 210.

An example of the address information storing unit 210 is shown in Fig. 5B. In this example, a key frame is inserted once per second. Time information corresponding to the key frame which is inserted every one second and the recording position of the moving image elementary stream on the moving image memory 204 corresponding to the time information are stored. Simultaneously with this, the recording position of the audio elementary stream corresponding to each moving image elementary stream on the audio memory 209 is also stored. The time information corresponding to old elementary stream which is erased by overwriting and the recording positions of the moving image/audio elementary streams corresponding thereto are removed from the address information storing unit 210.

Then, when there is an instruction to start the image recording from the user, the control unit 206 turns on the changeover switch 207, so that the moving image/audio elementary streams which are stored in the moving image memory 204 and the audio memory 209, respectively, are input to the multiplexing unit 203. The header is prepared on commencement of the multiplexing operation. At this time, the moving image/audio elementary streams which are subsequent to the time of instruction to start image recording are not input to the multiplexing unit 203, but the moving image/audio elementary streams which are precedent to the time of the instruction to start the image recording by a given period of time (hereinafter referred to as "going back time") are input thereto for multiplexing. The going back time may be preliminarily registered or may be preliminarily preset to a desired period of time by a user.

Alternatively, the going back time may be determined by the moving image/audio recording apparatus without relying upon the user's settings. For example, going back time Tu (in unit of second) may be determined depending upon the period of time Tr (in unit of second) for which the multiplexed data in which the moving image and audio elementary streams are multiplexed can be recorded in the recording unit 205 (Example, if Tr is 600 seconds or more, Tu is fixed to 10 seconds. If Tr is less than 600 seconds, Tu is less than 10 seconds depending upon Tr). The time Tr is obtained by dividing the free space of the recording unit 205 by the rate of the multiplexed data. The rate of the multiplexed data is obtained by adding the overhead due to multiplexing to the sum of the moving image encoding rate and audio encoding rate.

A case in which the going back time is assured as 3 seconds and multiplexing is started from the moving image and audio elementary stream which is 3 seconds precedent to the time of the instruction to start the image recording will be described. It is assumed that the user depresses an image record button 60 minutes after the starting of the viewing of a program. The control unit 206 reads out the recording positions of the moving image/audio elementary streams corresponding to the key frame at 59 minutes, 57 seconds which goes back from 60 minutes, 0 second by 3 seconds, on respective moving image memory 204 and the audio memory 209 from a relevant table in the address information storing unit shown in Fig. 5B. In an example of Fig. 5 (B), the recording position 0x40 on the moving image memory 204 and the recording position 0x1150 on the audio memory 209 are read out.

Subsequently, the moving image/audio elementary streams which are read from the recording positions on these memories are input to the multiplexing unit 203 via the changeover switch 207. The presentation time and ID are only required to be calculated with reference to the past time which goes back from the time of the instruction to start the image recording by the going back time. In the case of Fig. 5A, the presentation time (PT) begins with 0 second and gradually increases until the end of the image recording. ID begins with 0 and successive values are recorded. If the moving image/audio elementary streams of the going back time are lost from the moving image memory 204 and audio memory 209 by overwriting, the data from the recording positions of the leading key frames among the moving image/audio elementary streams, which remain on the moving image memory 204 and audio memory 209, respectively, are input to the multiplexing unit 203. After end of the image recording, the control unit 206 turns off the changeover switch 207 to prevent the moving image/audio elementary streams from being input to the multiplexing unit 203.

In the second embodiment of the moving image/audio recording apparatus of the present invention which has been described, the moving image memory 204 and the audio memory 209 comprise ring buffers. They are configured so that recording is restarted from the leading ends of the memories after recording is conducted until the final end thereof. In an alternative embodiment, the moving image memory 204 may be two FIFO memories and may be configured in such a manner that when a key frame of the moving image elementary stream appears, it will be moved from the FIFO memory which is being recorded to the leading address of another FIFO memory, so that any one of two FIFO memories of the moving image memory 204 normally start with the elementary stream of the key frame.

Simultaneously with this, the audio elementary stream at a time corresponding to the key frame is also recorded in the FIFO memory of the audio memory 209 from its leading address. By adopting such a configuration, when the moving image elementary stream and the audio elementary stream which go back in time from the time of the instruction to record the moving image are to be recorded in the recording unit 205, both moving image and audio elementary streams from the leading addresses of respective memories to the current recording positions are only required to be multiplexed and the address information storing unit 210 may be eliminated. However, in this case, the recordable period of time for which goes back from the time of the instruction to start image recording can not be preliminarily preset to a desired value.

From the same reason as that of the first embodiment of the moving image/audio recording apparatus of the present invention, the moving image memory 204 and the audio memory 209 are divided into M areas, respectively, so that the elementary stream of the key frame of the moving image and the audio elementary stream at the time corresponding thereto can be stored to the leading addresses of respective divided areas. It is assumed that M=10, each of the memories is divided into equal 10 areas so that the elementary stream of at least one second can be stored in m-th area of the memory (1≤m≤M). If it is assumed that the going back time is three seconds and that the elementary stream is recorded on the m-th area of the memory at the time of the instruction to start the image recording, then the elementary stream is only required to be read out from the leading address of the (m-3) -th area of the memory for starting the multiplexing. Since the control unit 206 only has to instruct the multiplexing unit 203 to start the multiplexing which starts with the elementary stream at (m-3)-th area in this case, the address information storing unit 210 can be eliminated.

In such a manner, data is stored in the form of unmultiplexed elementary stream prior to starting the image recording and multiplexing of the moving image and audio is started with the elementary stream at the time which goes back from the time of the instruction to start the image recording by the going back time. This enables multiplexed data to be prepared from the beginning of the multiplexing without interruption. Accordingly, the necessity to change the time information and ID can be eliminated. It is not necessary to modify or add the header subsequently for preparing the header when multiplexing is started at the time of the instruction to start the image recording.

Even if a user erroneously depresses a button to end the image recording, the program which was broadcast since the end of the image recording until restarting of the image recording can also be recorded by depressing the image recording start button again unless new moving image/audio elementary streams which are subsequent to the completion of the image recording are overwritten since those are continuously recorded in the moving image memory 204 and the audio memory 209. In other words , the period of time from the time when the user erroneously depresses the image recording ending button to the time when the user depresses the image recording start button is denoted as "T (seconds)".

If T ≤ (size of the moving image memory 204 / encoding rate of the moving image) = t1 and T ≤ (size of the audio memory 209 / encoding rate of audio) = t2, then image recording can be conducted without losing the data for this period.

Here, t3 which makes t3 ≤ min (tl, t2) is preliminarily set. min(t1, t2) is a function which selects smaller one of t1 and t2. In case of T≤t3, the data to be recorded in the recording unit 205 can be one multiplexed data without being subjected to any adverse influence due to erroneous depression of the image recording ending button by recording new multiplexed data so that it is continuous to the multiplexed data which has been just recorded. On the other hand, in case of T>t3, the data is recorded as two multiplexed data.

Since the speed of reading from the moving image memory 204 and audio memory 209 is generally faster than the speed of writing into the recording unit 205, recording of a program into the recording unit 205 can be finished simultaneously with the depression of the image recording ending button by the user even if multiplexing is started after going back in time. However, if the image recording period of time is very short in comparison with the going back time for which recording goes back in time precedent to the time of the instruction to start the image recording, similarly to the case the going back time is 60 seconds and image recording period is 1 second, multiplexing in the multiplexing unit 203 and recording of a program in the recording unit 205 is continued for a while after the user depresses the image recording end button. Accordingly, the changeover switch 207 may continue to close for a while after the depression of the image recording end button.

In this case, any one of following operations can be adopted as an operation on depression of the image recording start button.
■ Data which are before and after the time of depression of the image recording start button are recorded as separate multiplexed data.
■ The image recording start button is disabled and only the multiplexed data until the image recording button is previously depressed is recorded.
■ Aforementioned T is calculated. If T≤t3, then the multiplexed data is continuously recorded.

If T>t3, the image recording start button is disabled.

In such a manner, the changeover switch 207 continues to turn on even if the image recording end button is depressed. While recording is continued, operation such as turning off the power or interrupting the recording is prohibited.

The memory 104 shown in Fig. 1 and the moving image memory 204 shown in Fig. 2, which normally record the data comprise memories which are incorporated in the moving image/audio recording apparatus, and are separate from the recording units 105, 205 shown in Figs. 1 and 2, respectively, for long term recording, comprising disc media or memory card. Recording is normally conducted on the incorporated memory having a large number of rewritable times while data are recorded on the disc media or memory card having a small number of rewritable times at only the image recording mode. Since this reduces the number of rewriting times or recording times, the above-mentioned problem that the life time of the storage media is short can be solved.

### (Third Embodiment)

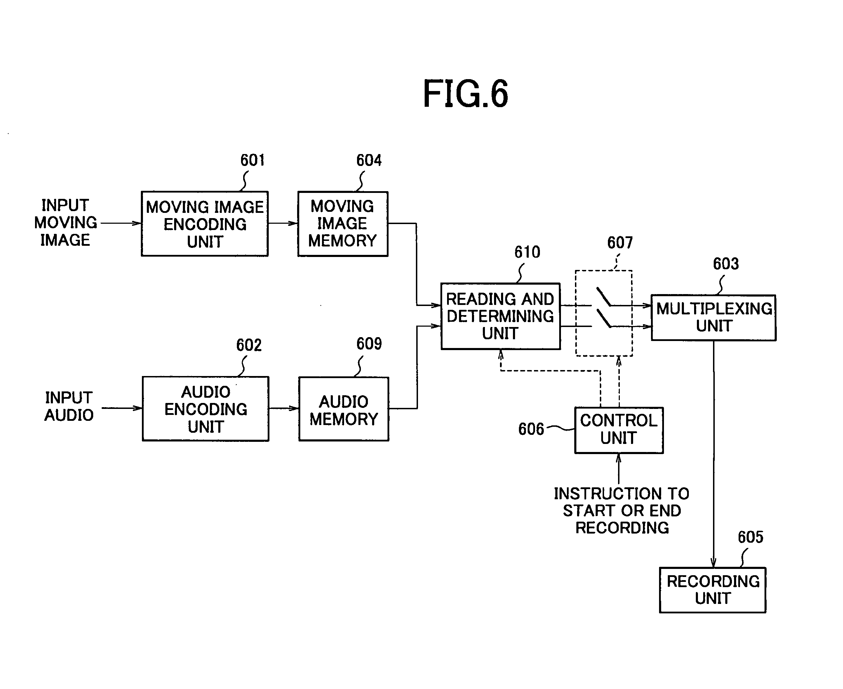

A block diagram of a third embodiment of the moving image/audio recording apparatus of the present invention is illustrated in Fig.6. A multiplexing unit 603 and recording unit 605 in Fig. 6 have the same functions as those of the multiplexing unit 203 and the recording unit 205 of Fig. 2 in the second embodiment. Therefore, description of them will be omitted herein.

The moving image encoding unit 601 generates a moving image elementary stream by encoding input moving images and divides the moving image elementary stream into packets each having a given size and outputs moving image packets which is added with key information representative of whether a key frame is contained or not, together with time information in each packet. The key information assumes, for example, a value "1" or "0" which is representative of whether it contains a key frame or not, respectively.

The audio encoding unit 602 encodes input audio to generate an audio elementary stream and divides the audio elementary stream into packets each having a given size and adds time information to each packet to output audio packets.

Since the key frame is generally divided into a plurality of packets, packets having a value of the key information of "1" may continue. Therefore, moving image packet is added with heading information representing whether it is the leading end of the frame. If the leading information is "1", then it represents the leading end of the frame.

The moving image packets from the moving image encoding unit 601 are normally written into the moving image memory 604. The moving image packets which are written previously by the going back time are normally read out by a reading and determining unit 610. The moving image memory 604 may be implemented by the above-mentioned ring buffer or FIFO memory.

Similarly, audio packets from the audio encoding unit 602 are normally written into the audiomemory 609. The audio packets which are written previously by the going back time are normally read out by a reading and determining unit 610. In other words, the moving image or audio packets corresponding to past going back time are normally recorded in these memories. Similarly to the second embodiment, the moving image memory 604 and audio memory 609 may be implemented as separate areas of a physically single memory.

When image recording is not conducted, the changeover switch 607 is turned off and the moving image packets and audio packets which are read out by the reading and determining unit 610 are discarded as they are. When the control unit 606 is instructed to start the image recording, the control unit 606 issues an instruction to the reading and determining unit 610 to determine whether or not the read out moving image packets contain the leading end of the key frame. The reading and determining unit 610 retrieves a packet containing the leading end of the key frame by using the key information and heading information and outputs moving image packets which are subsequent to the packet containing the leading end of the key frame which was firstly found to the changeover switch 607. For example, a first moving image packet having key information "1" and heading information of "1" is retrieved.

The reading and determining unit 610 conducts the above-mentioned processing and reads the time information which is added to the moving image packet containing the leading end of the key frame which was firstly found to retrieve an audio packet which is added with the time information close to the time information in interest. If the reading and determining unit 610 finds out such a packet, it outputs to the changeover switch 607 the audio packets which are subsequent thereto. The time information which is close to the time information of the moving image packet means the time information which resides in a predetermined range of time which is approximate to the time information of the moving image packet. If there are a plurality of audio packets which are added with the time information which meets the above-mentioned requirement, it may be earliest time information, or time information which is the closest to the time information of the moving image packet. The above-mentioned retrieving processing is an exemplary processing for synchronizing the moving image packets with audio packets. Synchronization may be conducted by a method which is different from the above-mentioned processing.

The control unit 606 turns on the changeover switch 607 in response to an instruction to start image recording for inputting the moving image and audio packets from the reading and determining unit 610 to the multiplexing unit 603. Operations of the multiplexing unit 603 and recording unit 605 are identical to those of the multiplexing unit 203 and recording unit 205 which has been described in the second embodiment.

In such a manner, it is possible to record the multiplexed data of the moving image and audio which go back in time from the time of the image recording start instruction. The maximum going back time depends upon the data capacity of the moving image memory 604 and audio memory 609 and the bit rate of the moving image/audio elementary stream. The going back time maximizes when the packets which are subsequent to the packets containing the leading end of the first key frame recorded on the moving image memory 604 are recorded as mentioned-above after the image recording start is instructed in the reading and determining unit 610. The maximum time is represented as T. If the going back time is to be controlled to time t which is less than T, the leading end of the key frame of the packets which lapses (T-t) from the front end of the moving image memory 604 is only required to be retrieved after the image recording start instruction. However, it is assumed that the key frame is inserted in sufficient frequency.

After the instruction to end the image recording was issued, the reading and determining unit 610 retrieves the moving image packets containing frame tail and audio packets corresponding thereto among the packets around the time which has lapsed the going back time after the recording end instruction and discards packets which are subsequent to the retrieved packets. The control unit 606 turns off the changeover switch 607 when the packets are not input to the changeover switch 607.

### (Fourth Embodiment)

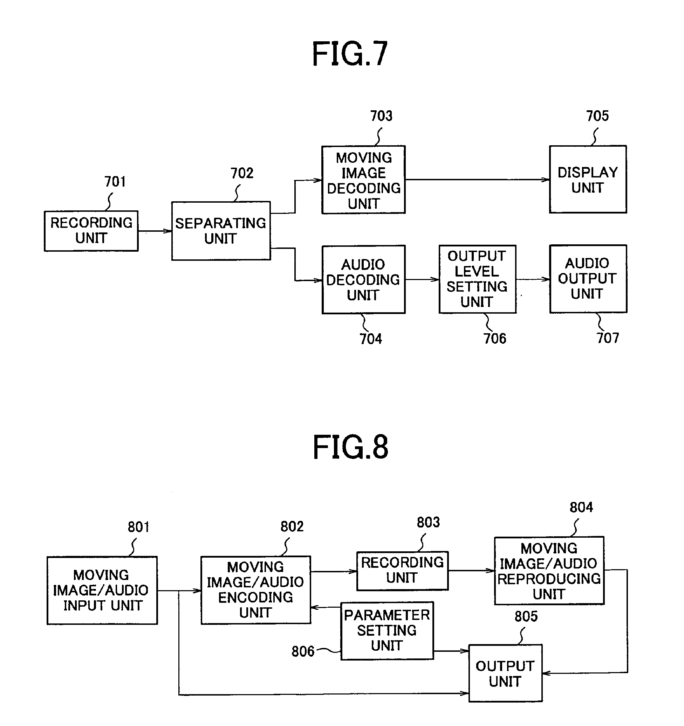

A block diagram showing a fourth embodiment of the moving image/audio recording apparatus and moving image/audio playback (reproducing) apparatus of the present invention is illustrated in Fig. 7. A recording unit 701 records the multiplexed data of the moving image/audio elementary streams. A separating unit 702 separates the multiplexed data for outputting moving image elementary stream and audio elementary stream. A moving image decoding unit 703 decodes the moving image elementary stream. An audio decoding unit 704 decodes the audio elementary stream. A display unit 705 displays decoded moving images. An output level setting unit 706 sets the output level of decoded audio data. An audio output unit 707 outputs decoded audio data.

The present embodiment is adapted to decode and reproduce the multiplexed data which has been recorded by using any one of the first to third embodiments. Various audio encoding formats can be used in the present invention, if audio decoding and reproducing (play back) operation is conducted at some point where is cut in an audio elementary stream, noise is generally included in reproduced audio on commencement of playback. If the audio encoded using, for example, predictive encoding format by ADPCM, reproduction of normal data is impossible for a given period of time immediately after the reproduction since there is no immediately precedent decoded data for the predictive differential data on start of reproduction. After a lapse of a given period of time, normal audio is reproduced by a refresh function due to error resilience and so on which the audio encoding format has. For example, an approach to recover from the data error by encoding the audio data per se in lieu of predictive differential data at every predetermined times or an approach to prevent data error propagation by making the predictive coefficient less than 1 are contemplated.

In the present embodiment, the output level of the decoded audio data is preset to a predetermined value or less, for example, a minimum level for a predetermined period of time immediately after the instruction to start reproduction, so that the above-mentioned noise is not output from the audio output unit 707. In other words, when the output level setting unit 706 receives an instruction to start reproduction from the control unit (not shown), it sets the output level to a given value or less irrespective of the value of the decoded audio data from the audio decoding unit 704. The output level setting unit 706 returns the output level to an initial value for usual audio output after the lapse of the predetermined period of time since the instruction to start reproduction. If a minimum output level is used as a predetermined value, the audio output level is kept at a minimum output level irrespective of the value of the decoded audio data for the predetermined period of time since the instruction to start reproduction.

In such a manner, output of uncomfortable audio from the audio output unit 707 due to inclusion of noise in the audio data can be prevented by suppressing the level of the output to the audio output unit 707 only for a predetermined period of time after the instruction to start reproduction.

### (Fifth Embodiment)

A block diagram showing a fifth embodiment of a moving image/audio recording apparatus and a moving image/audio reproducing apparatus of the present invention is illustrated in Fig. 8. A moving image/audio input unit 801 inputs moving image and audio. A moving image/audio encoding unit 802 encodes moving image and audio. A recording unit 803 records encoded moving image/audio data. A moving image/audio reproducing unit 804 reproduces moving image and audio from the encoded moving image/audio data. An output unit 805 reproduces moving image and audio which are input by the moving image/audio input unit 801 or reproduced by the moving image/audio reproducing unit 804. A parameter setting unit 806 sets the above-mentioned going back time or image recording modes for the moving image/audio encoding unit 802.

The present embodiment is concerned with the moving image/audio recording and reproducing apparatus in which moving image and audio are encoded and recorded in the recording unit 803 and the encoded data which is read out from the recording unit 803 is decoded for reproducing the image and audio. Operation of the present embodiment will be described with reference to Fig. 8.

The moving image/audio input unit 801 comprises, for example, a television receiving circuit and video input circuit and digitalizes the moving image and audio to input them into the moving image/audio encoding unit 802 or output unit 805. The input moving image and audio are reproduced in the output unit 805.

The moving image/audio encoding unit 802 encodes the input moving image and audio by any one of the methods which have been described with reference to the first to third embodiments, multiplexes them for inputting the multiplexed data to the recording unit 803. The multiplexed data which is recorded in the recording unit 803 includes moving image and audio which go back in time by a going back time since the time of an instruction to start image recording.

The moving image/audio reproducing unit 804 reads out the multiplexed data which is recorded in the recording unit 803 and decodes the moving image and audio, for example, by a method which has been described in the fourth embodiment for inputting the decoded moving image and audio to the output unit 805.

The parameter setting unit 806 sets the going back time which is used in the moving image/audio encoding unit 802.

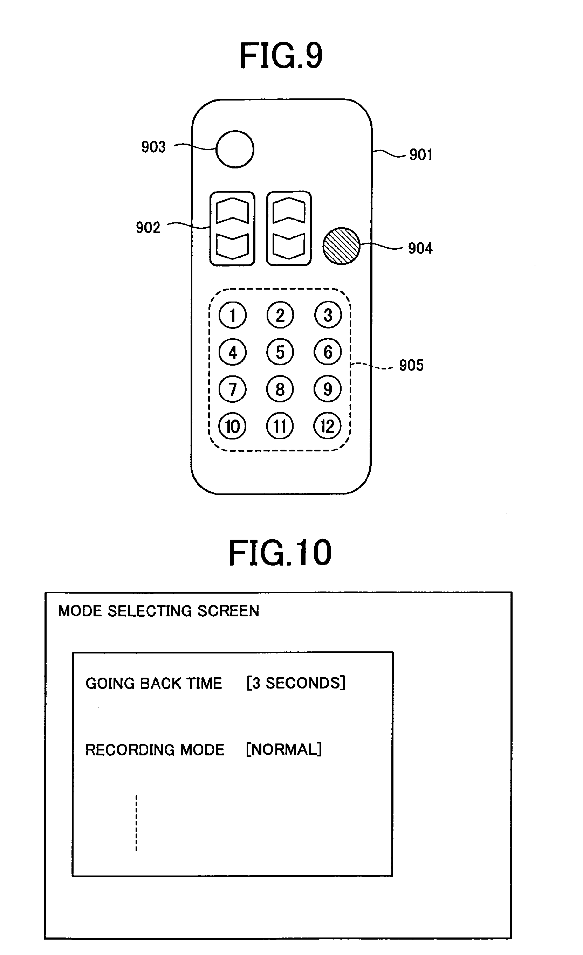

The going back time is preset on the mode selection screen as shown in Fig. 10 which is displayed on a monitor which the output unit 805 includes by using, for example, a remote controller 901 shown in Fig. 9. A cursor moving button shown in Fig. 9 is an up going or down going button which chooses any of choices "the going back times" in Fig. 10. A plurality of going back times, such as "0 second", "3 seconds", "5 seconds", "15 seconds" are preliminarily registered as the choices of the going back time. Any one of the registered choices can be selected. After one of the choices is selected by the cursor moving button 902, the going back time is determined by a determining button 903. The determined going back time is displayed on the monitor of the output unit 805 via the parameter setting unit 806 and is transmitted to the moving image/audio encoding unit 802.

If the going back time is zero, then the mode of going back operation of the present invention is "going back off recording" in which a function of going back image recording is not used. Therefore, only "off" may be displayed as "mode of going back operation" in lieu of "going back time (0 second)". "Image recording mode" is illustrated in addition to "going back time" or modes of going back off recording and going back recording in a selection menu in Fig. 10. The present invention is not limited to these displays. Other modes, such as sound quality adj ustment and color adj ustment may be added to the menu. "Image recording mode" in Fig. 10 refers to the encoding format and encoding parameters (the number of pixels, frame rate, bit rate and so on) which are used for encoding the moving image and audio.

Another example of presetting the going back time may include only two times such as 0 second (off) and fixed 5 seconds. In this case, the going back time can be preset by only the button actuation on start of image recording in lieu of setting the going back time on a mode selection screen as shown in Fig. 10. For example, when image recording is instructed by the recording button 904 of Fig. 9, the apparatus can be configured so that depression of the recording button for a short period of time within a predetermined period of time instructs to "record at going back time of 0 second (off) " and depression of the recording button for a given period of time which is longer than the predetermined period of time instructs to "record at going back time of 5 seconds". At this point, the parameter setting unit 806 determines by a signal from the remote controller 901 whether the recording button 904 is depressed for a short or long period of time and notifies the moving image/audio encoding unit 802 of the goingback time of 0 or 5 seconds for short or long depression, respectively.

The other example of presetting the going back time is to continuously indicate the going back time with the period of time for which the recording button 904 is depressed (duration of the recording start instruction signal). For example, the depression period of time may be the going back time or the depression period of time which is multiplied by a constant coefficient may be the going back time. In general, the going back time can be calculated by (y=f (x)) representing the going back time (y) as a function of the period of time (x) for which the recording button 904 is depressed. The option to select any of two going back times by short or long depression of the button can be achieved by using following step functions as the function y.
y = t1 (when x<a)
y = t2 (when x≥a)
Wherein a is a threshold for discriminating short depression from long depression, t1 and t2 denote the going back times in case of short and long depressions, respectively.

This approach makes it possible to easily preset the going back time without conducting troublesome operation of the remote controller 901 while watching a menu in monitor screen. It should be noted that it is possible to display the going back time in monitor screen when recording start is instructed, so that the preset value of the going back time is informed to the user.

Now, an operation when the user changes the received channels with a channel button 905 of Fig. 9 or changes the recording modes via the mode selection screen of Fig. 10 will be described.

Although the operation which has been described in the first to third embodiments is achieved even if the channels or recording modes are changed, following problems will occur.

(1) If the user instructs to start recording immediately after the channels are changed, the moving image and audio on a channel, previous to change in channel may be recorded on the leading position of the multiplexed data.

Therefore , other moving image and audio which are not intended by the user may be recorded thereon.

(2) If the user instructs to start recording immediately after the recording mode which represents the encoding conditions is changed, moving image/audio data which is generated by a recording mode which is not intended by the user may be included and recorded in leading position of the recorded moving image and audio data. In addition, if the encoding format and the number of pixels of the moving image and audio which are recorded by using different recording mode are different, a problem in which reproduced images become instable may occur.

In the present embodiment, the above-mentioned problem is eliminated by clearing the contents of the moving image memory or audio memory used for time going back recording by deleting the moving image and/or audio on a channel different from that when recording start is instructed, or the moving image/audio data which is temporarily recorded in different recording mode (encoding condition). In the moving image/audio recording and reproducing apparatus shown in Fig. 8, the parameter setting unit 806 inputs a clearing signal to the moving image/audio encoding unit 802 if the moving image and/or audio are/is changed by the actuation of a switch such as channel select button or the recording mode of the moving images and/or audio (encoding conditions) is changed by a recording mode (encoding conditions) changing means. When the clearing signal is input to the moving image/audio encoding unit 802, the encoding unit 802 clears all the contents stored in the temporarily storing areas which are shown in the memory 104 of Fig. 1, the moving image memory 204 and the audio memory 209 of Fig. 2 and the moving image memory 604 and the audio memory 609 of Fig. 6. This causes the multiplexed data, elementary streams or packets of moving image and audio which are recorded in the temporarily storing areas of these memories to be erased, so that only the moving image/audio data which is subsequent to the changes in channels and recording modes when the start of image recording is instructed is recorded in the recording unit 803.

As a method to solve the problems (1) and (2), a method in which the period of time since the last change in channels or recording mode until the instruction to start recording is determined and is used as the going back time is contemplated in addition to the method to clear the contents in the temporarily storing areas. For example, the parameter setting unit 806 is provided with a counter which measures time. When an instruction to change the channels or recording mode is issued from the remote controller 901, measurement of time by the counter is started. When the start of recording is instructed by the depression of the recording button 904 , the time which is measured by the counter is compared with the going back time which is set by the user. Less one of the compared times is informed to the moving image/audio encoding unit 802 as actual going back time. This allows the actual going back time to be changed to a length which is not longer than the period of time since the channels or recording modes are changed until the start of recording is instructed. It is possible to record only the moving image/audio which are subsequent to the least a change in channel or recording mode in the recording unit 803 without clearing any contents in the temporarily storing area of the memory.

### (Sixth Embodiment)

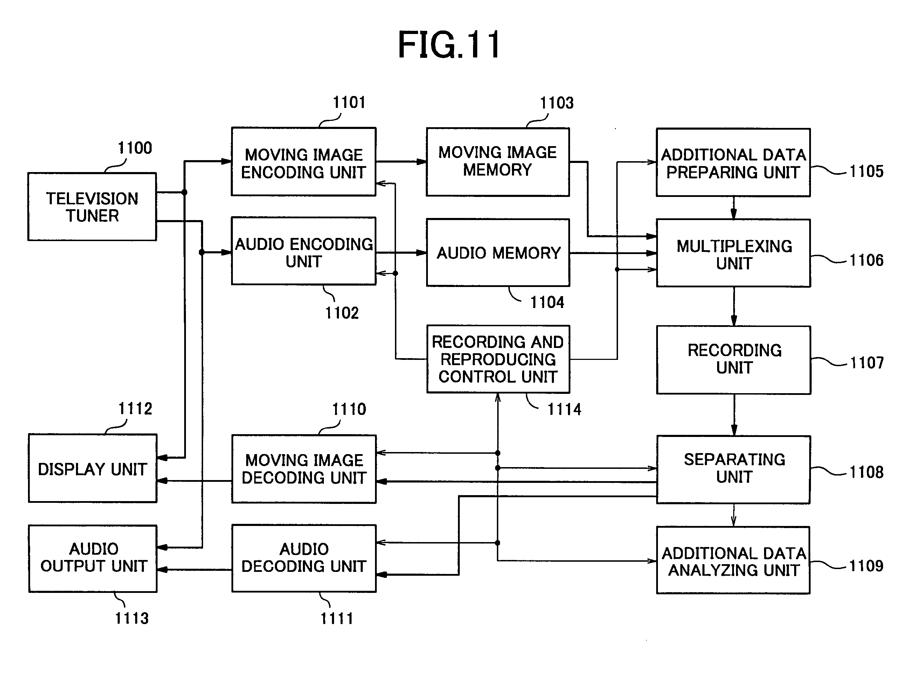

A block diagram showing a sixth embodiment of the moving image/audio recording apparatus and moving image/audio reproducing apparatus of the present invention is illustrated in Fig. 11. In Fig. 11, a reference numeral 1100 denotes a television tuner which receives television broadcast signals for outputting moving image/audio data; 1101 denotes a moving image encoding unit for encodingmoving image data which is output from the television tuner 1100; 1102 denotes an audio encoding unit for encoding audio data output from the television tuner 1100; 1103 denotes a moving image memory which temporarily records and stores encoded moving image data; 1104 denotes a audio memory which temporarily records and stores encoded audio data; 1105 denotes an additional data preparing unit which prepares additional data relating to moving image/audio data which is being recorded; 1106 denotes a multiplexing unit which multiplexes the encoded moving image data, audio data and additional data in accordance with a given recording format; 1107 denotes a recording unit for recording and storing the multiplexed moving image/audio data; 1108 denotes a separating unit which demultiplexes the multiplexed moving image/audio data and separate into the moving image data, audio data and additional data; 1109 denotes an additional data analyzing unit which analyzes the additional data; 1110 denotes a moving image decoding unit which decodes the encoded moving image data; 1111 denotes an audio decoding unit for decoding the encoded audio data; 1112 denotes a display unit which displays moving image data; 1113 denotes an audio output unit for outputting audio data; 1114 denotes a recording and reproducing control unit which controls the operation of the moving image/audio recording and reproducing apparatus of the present embodiment.

The moving image/audio recording and reproducing apparatus of the present embodiment has a recording mode in which moving image/audio data which goes back in time from the time when the start of recording is requested by the user is recorded (hereinafter referred to as "going back recording mode") in addition to usual recording mode in which moving image/audio data which is subsequent to the time when the start of recording is requested by the user is recorded (hereinafter referred to as "usual recoding mode") as is provided by usual VTR and the like.

Recording operation of the moving image/audio recording and reproducing apparatus of the present embodiment will now be described assuming that switching between the usual recording mode and going back recording mode is preliminarily preset by the user. Any one of methods which have been described in the foregoing first to fifth embodiments can be used for implementing the going back recording.

In the going back recording mode, the recording and reproducing control unit 1114 requests the moving image encoding unit 1101 and audio encoding unit 1102 to start encoding irrespective of whether there is a request to start recording from the user. The moving image encoding unit 1101 and the audio encoding unit 1102 which receive a request to start encoding encodes the moving image data and audio data output from the television tuner 1100 in accordance with predetermined respective encoding formats, for outputting them to the moving image memory 1103 and audio memory 1104, respectively. It should be noted that the moving image memory 1103 and the audio memory 1104 record consecutively encoded moving image data and audio data, respectively, and consecutively erase old data for normally recording and storing the moving image data and audio data which go back in time. The moving image/audio data output from the television tuner 1100 are also output to the display unit 1112 and the audio output unit 1113.

Then, the recording and reproducing control unit 1114 monitors a request to start recording from the user. If there is a request to start recording from the user, the recording and reproducing control unit 1114 requests the additional data preparing unit 1105 and the multiplexing unit 1106 to request to prepare the additional data and to start multiplexing, respectively. In the usual recording mode, the recording and reproducing unit 1114 requests the moving image encoding unit 1101 and audio encoding unit 1102 to start their encoding, respectively, at this time. The additional data preparing unit 1105 prepares the additional data relating to the moving image/audio data which is being recorded for outputting it to the multiplexing unit 1106. The additional data may include information which is necessary to reproduce the moving image/audio data which is being recorded and information which is helpful for the user to retrieve desired moving image/audio data from a plurality of moving image/audio data stored in the recording unit 1107. For example, it may include information on the image size, encoding parameters, program titles which is being recorded and recording date and time. In the following description, it is assumed that two pieces of information such as going back mode information which represents whether recording is in the usual recording mode or going back recording mode (hereafter referred to as recording mode information) and time information which represents the going back time if the recording is in the going back recording mode (hereafter referred to as "going back time information") are recorded as additional information.

The multiplexing unit 1106 which has received a request to start multiplexing multiplexes the encoded moving image/audio data and additional data for recording the multiplexed data in the recording unit 1107. The present embodiment will be described assuming that the moving image/audio data as well as the additional data is multiplexed into a single multiplexed data and is recorded and stored. If a recording format which can not treat the additional data other than the moving image/audio data is used as the recording format for the moving image/audio data, the embodiment may be configured so that the additional data may be recorded in the recording unit 1107 separately from the moving image/audio data without being multiplexed and an ID which enables the moving image/audio data corresponding to the additional data to be identified is recorded.

Then, the recording and reproducing control unit 1114 monitors a request to end recording from the user. If there is a request to end recording from the user, the recording and reproducing control unit 1114 requests the multiplexing unit 1106 to stop its multiplexing. In the usual recording mode, the control unit 1114 requests the moving image encoding unit 1101 and the audio encoding unit 1102 to stop respective encoding. In response to the request to stop encoding, the moving image encoding unit 1101 and the audio encoding unit 1102 stop their encoding. In the going back recording mode, the moving image encoding unit 1101 and the audio encoding unit 1102 continue their encoding to make preparations for next request to start recording from the user. The multiplexing unit 1106 which has received a request to stop multiplexing stops the multiplexing of the moving image/audio data and additional data to end the recording.

As mentioned above, the going back recording is implemented by always recording and storing the moving image/audio data corresponding to the going back time in the moving image memory 1103 and the audio memory 1104 in a temporary manner in the moving image/audio recording and reproducing apparatus of the present embodiment. It should be noted although the moving image memory 1103 and the audio memory 1104 are disposed at the rear stage of the moving image encoding unit 1101 and the audio encoding unit 1102 , respectively, they may be disposed at the front stage of the moving image encoding unit 1101 and the audio encoding unit 1102 so that the moving image/audio data prior to encoding is recorded and stored. Alternatively, going back recording may be achieved by a configuration in which similar buffer memory is disposed at the rear stage of the multiplexing unit 1106 so that the multiplexed moving image/audio data is temporarily recorded and stored.

Now, a glance guide and reproducing operation of the recorded data in the moving image/audio recording and reproducing apparatus of the present embodiment will be described. It should be noted that it is assumed that the user selects desired moving image/audio data from the glance guide for reproducing the selected moving image/audio data, since a plurality of moving image/audio data are stored in the recording unit 1107. The glance guide of the recorded data stored in the recording unit 1107 is displayed as a thumb nail image (reduced image) which represents the content of the moving image/audio data.

In response to a request to obtain the glance guide of the recorded data from the user, the recording and reproducing control unit 1114 requests the separating unit 1108 to conduct consecutive demultiplexing for all moving image/audio data stored in the recording unit 1107. The separating unit 1108 which has received the demultiplexing request demultiplexes the specified moving image/audio data for outputting separated addition data, moving image data and audio data to the additional data analyzing unit 1109, the moving image decoding unit 1110, and the audio decoding unit 1111, respectively. The additional data analyzing unit 1109 extracts information on the recording mode and going back time of the moving image/audio data in interest which is recorded as additional data to inform the recoding and reproducing control unit 1114 of the extracted information. The recording and reproducing control unit 1114 determines the thumb nail image of the moving image/audio data used for the glance guide from the informed information on the recording mode and going back time.

Specifically, the recording and reproducing control unit 1114 requests the moving image decoding unit 1110 to start decoding so as to decode the image data from the leading position of the recorded moving image data in the usual recording mode. The control unit 1114 requests the moving image decoding unit 1110 to start decoding so as to decode the image data corresponding to the time of the instruction to start image recording which has lapsed the period of time represented by informed going back time information from the leadingposition of the recorded moving image data in the going back recording mode as a thumb nail image. The moving image decoding unit 1110 which has received a request to start decoding decodes and reduces the specified image data for outputting the decoded data as a thumb nail image representing the moving image/audio data to the display unit 1112 and informs the recording and reproducing unit 1114 of the completion of decoding. The recording and reproducing control unit 1114 which has received a notification of the decode ending requests the separating unit 1108 to stop the demultiplexing of the moving image/audio data. The separating unit 1108 stops demultiplexing. Output operation of the thumb nail image is similarly repeated for the remaining moving image/audio data stored in the recording unit 1107.

Subsequently, the user selects desired moving image/audio data from the thumb nail image of the glance guide for requesting the control unit 1114 to play back the moving image/audio data in interest. In response to this request from the user the recording and reproducing control unit 1114 request the separating unit 1108 to conduct demultiplexing and request the moving image decoding unit 1110 and the audio decoding unit 1111 to start decoding. The separating unit 1108 which has received a request of demultiplexing demultiplexes the specified moving image/audio data for outputting the separated additional data, moving image data and audio data to the additional data analyzing unit 1109, moving image decoding unit 1110 and audio decoding unit 1111, respectively. The moving image decoding unit 1110 and audio decoding unit 1111 which have received requests to start decoding decode the moving image data and audio data for outputting the decoded moving image data and audio data to the display unit 1112 and audio output unit 1113, respectively.

As mentioned above, in the moving image/audio recording and reproducing apparatus of the present invention, the thumb nail image of the glance guide corresponding to a plurality of moving image/audio data stored in the recording unit 1107 allows the user to easily select desired moving image/audio data. Since the image at the time when the user requests to start recording is at-a-glance displayed as the thumb nail image if the recording mode information of the moving image/audio data (that is, going back information mode) is the going back recording mode, the user is able to easily know the contents of the corresponding moving image/audio data via the thumb nail image.

A case in which the recording mode information and going back time information is used as the additional data used for preparing the thumb nail image has been described. Since the moving image/audio data for a period of the going back time (for example, 10 seconds) is stored in the moving image memory 1103 and the audio memory 1104 in the going back recording mode, recording and extraction of the going back time information may be omitted and the image which is 10 seconds subsequent to the leading position of the data may be always used as the thumb nail image of the moving image/audio data in which the recording mode information represents the going back recording mode. A configuration in which the recording mode information is omitted is also possible. In this case, the going back time information is always recorded and time information which represents the going back time "0" is recorded in the going back time information as information representing usual recording mode.

In case in which the image data at the specified time can not be readily decoded as the thumb nail image since the encoding format of the moving image data is , for example, an encoding format using the interframe correlation such as MPEG-4, a nearest intraframe which doesn't use interframe correlation may be used as the thumb nail image. Furthermore, a configuration to use the information which presents recording position in the moving image/audio data where image data at the time when the user requests to start recording are multiplexed and recorded, and thumb nail image itself per se in lieu of the recording start time information enable the image at the time of user's request to start recording to be used as the thumb nail image in the going back recording mode.

If the user erroneously conducts recording in the going back recording mode, use of recording mode information and/or recording start time information which are/is recorded as the additional data enables unnecessary moving image/audio data which has been erroneously recorded to be skip reproduced.

In accordance with the present invention, it is possible to record a television program from the time which goes back since the time when a user instructs to start recording by temporarily storing encoded data of the moving image and audio which are being broadcast in a temporarily storing area of a built-in memory and by recording the encoded data of the moving image and audio which are recorded in the temporarily storing area in a long term storing area of a storage media which is a recording unit when the user depressed a recording button as is apparent from the foregoing description.

Appropriately adjusting and presetting of the recording start time which goes back in time makes it possible to control the going back recording, so that the data portion which is previous to the time when the encoding conditions or channels are changed is not recorded even if they are changed before the user depresses the recording button.

It is possible for the user to freely preset the going back time by a method in which a going back off mode having the going back time of zero is provided as the mode of going back operation and the going back time is selected among a plurality of the preliminarily registered going back times.

It is possible to conduct a correct reproduction from the leading position of the recorded data by conducting a going back recording from the time corresponding to a key frame which is close to the going back time.

Even if the long term storing area of the recording unit in the moving image/audio recording apparatus of the present invention consists of a storage medium having a less number of rewritable times, it is possible to make the life time of the moving image/audio recording apparatus longer by providing the temporarily storing area of the memory which always conducts temporal recording with a memory having a large number of rewritable times.

## Claims

1. A moving image/audio recording apparatus, wherein the apparatus comprises
a memory for temporarily storing moving image data and/or audio data;
a recording unit for recording the moving image data and/or audio data in response to an instruction to start recording; and
an encoding unit for encoding the moving image and/or audio in specified encoding conditions,
and wherein if the moving image data and/or the audio data from the time which goes back from the time of the instruction to start recording are/is recorded in the recording unit, the time which goes back is subsequent to the time when the encoding conditions are changed to those at the time of the instruction to start recording.

2. A moving image/audio recording apparatus, wherein the apparatus comprises
a memory for temporarily storing moving image data and/or audio data;
a recording unit for recording the moving image data and/or audio data in response to an instruction to start recording; and
a switching unit for switching moving image and/or audio to other moving image and/or other audio,
and wherein if the moving image data and/or the audio data from the time which goes back from the time of the instruction to start recording are/is recorded in the recording unit, the time which goes back is subsequent to the time when the moving image and/or audio are/is switched to those at the time of the instruction to start recording.

3. A moving image/audio recording apparatus, wherein the apparatus comprises
a memory for temporarily storing moving image data and/or audio data;
a recording unit for recording the moving image data and/or audio data in response to an instruction to start recording; and
a mode selecting unit for selecting a mode of going back operation,
and wherein any one of recording of the moving image data and/or audio data from the time which goes back from the time of the instruction to start recording and recording of the moving image data and/or audio data from the time of the instruction to start recording in the recording unit is selected as the mode of going back operation in the mode selecting unit.

4. A moving image/audio recording apparatus, wherein the apparatus comprises
a memory for temporarily storing moving image data and/or audio data;
a recording unit for recording the moving image data and/or audio data in response to an instruction to start recording; and
a parameter setting unit for setting a time which goes back by a given period of time from the time of the instruction to start recording,
and wherein the moving image data and/or audio data from the time corresponding to a key frame of the moving image data existing at the going back time or in the vicinity thereof are/is recorded in the recording unit.

5. A moving image/audio recording apparatus, wherein the apparatus comprises
a memory for temporarily storing moving image data and/or audio data;
a recording unit for recording the moving image data and/or audio data in response to an instruction to start recording; and
a parameter setting unit for setting a time which goes back by a given period of time from the time of the instruction to start recording,
and wherein the moving image data and/or audio data from the time which goes back are/is recorded in the recording unit and the given period of time is set by selecting any one of a plurality of time lengths in the parameter setting unit.

6. A moving image/audio recording apparatus, wherein the apparatus comprises
a memory for temporarily storing moving image data and/or audio data;
a recording unit for recording the moving image data and/or audio data in response to an instruction to start recording,
and wherein the recording unit is adapted to record the moving image data and/or audio data from the time which goes back from the time of the instruction to start recording and the number of the rewritable times of the memory is larger than that of the recording unit.

7. A moving image/audio recording method, wherein the method comprises
a recording step for recording the moving image data and/or audio data in a recording medium in response to an instruction to start recording; and
an encoding step for encoding the moving image and/or audio in specified encoding conditions,
and wherein if the moving image data and/or the audio data from the time which goes back from the time of the instruction to start recording are/is recorded at the recording step, the time which goes back is subsequent to the time when the encoding conditions are changed to those at the time of the instruction to start recording.

8. A moving image/audio recording method, wherein the method comprises
a recording step for recording the moving image data and/or audio data in a recording medium in response to an instruction to start recording; and
a switching step for switching moving image and/or audio to other moving image and/or other audio,
and wherein if the moving image data and/or the audio data from the time which goes back from the time of the instruction to start recording are/is recorded at the recording step, the time which goes back is subsequent to the time when the moving image and/or audio are/is switched to those at the time of the instruction to start recording.

9. A moving image/audio recording method, wherein the method comprises
a recording step for recording the moving image data and/or audio data in a recording medium in response to an instruction to start recording; and
a mode selecting step for selecting a mode of going back operation,
and wherein any one of recording of the moving image data and/or audio data from the time which goes back from the time of the instruction to start recording and recording of the moving image data and/or audio data from the time of the instruction to start recording in the recording unit is selected as the mode of going back operation at the mode selecting step.

10. A moving image/audio recording method, wherein the method comprises
a recording step for recording the moving image data and/or audio data in a recording medium in response to an instruction to start recording; and
a parameter setting step for setting a time which goes back by a given period of time from the time of the instruction to start recording,
and wherein the moving image data and/or audio data from the time corresponding to a key frame of the moving image data existing at the going back time or in the vicinity thereof are/is recorded at the recording step.

11. A moving image/audio recording method, wherein the method comprises
a recording step for recording the moving image data and/or audio data in a recording medium in response to an instruction to start recording; and
a parameter setting step for setting a time which goes back by a given period of time from the time of the instruction to start recording,
and wherein the moving image data and/or audio data from the time which goes back are/is recorded at the recording step and the given period of time is set by selecting any one of a plurality of time lengths at the parameter setting step.
